(19) Europäisches Patentamt / European Patent Office / Office européen des brevets

(11) **EP 4 075 537 A1**

(12) **EUROPEAN PATENT APPLICATION**
published in accordance with Art. 153(4) EPC

(43) Date of publication:
**19.10.2022 Bulletin 2022/42**

(21) Application number: **20899694.2**

(22) Date of filing: **09.12.2020**

(51) International Patent Classification (IPC):
**H01M 4/13** (2010.01)     **H01M 4/133** (2010.01)
**H01M 4/134** (2010.01)     **H01M 4/36** (2006.01)
**H01M 10/05** (2010.01)     **H01M 50/409** (2021.01)

(52) Cooperative Patent Classification (CPC):
**H01M 4/13; H01M 4/133; H01M 4/134; H01M 4/36;**
**H01M 10/05; H01M 50/409;** Y02E 60/10

(86) International application number:
**PCT/JP2020/045747**

(87) International publication number:
**WO 2021/117748 (17.06.2021 Gazette 2021/24)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **13.12.2019 JP 2019225086**

(71) Applicant: SANYO Electric Co., Ltd.
**Daito-shi,**
**Osaka**
**574-8534 (JP)**

(72) Inventors:
• **SUGII Noriko**
  **Osaka-shi,**
  **Osaka 540-6207 (JP)**
• **SUNANO Taizou**
  **Osaka-shi,**
  **Osaka 540-6207 (JP)**
• **SHINOMIYA Takuya**
  **Osaka-shi,**
  **Osaka 540-6207 (JP)**
• **YOKOI Mai**
  **Osaka-shi,**
  **Osaka 540-6207 (JP)**

(74) Representative: **Novagraaf International SA**
**Chemin de l'Echo 3**
**1213 Onex, Geneva (CH)**

(54) **NONAQUEOUS ELECTROLYTE SECONDARY BATTERY**

(57) The purpose of the present disclosure is to provide a nonaqueous electrolyte secondary battery which has improved high-rate charge and discharge cycle characteristics and improved high-temperature storage characteristics, while being suppressed in decrease of the battery capacity. A nonaqueous electrolyte secondary battery according to one embodiment of the present disclosure has a negative electrode that comprises a negative electrode collector, a first negative electrode mixture layer that is provided on the surface of the negative electrode collector, and a second negative electrode mixture layer that is provided on the surface of the first negative electrode mixture layer; that first negative electrode mixture layer and the second negative electrode mixture layer contain graphite particles; the ratio of the void fraction (S2) among the graphite particles in the second negative electrode mixture layer to the void fraction (S1) among the graphite particles in the first negative electrode mixture layer, namely S2/S1 is from 1.1 to 2.0: and the ratio of the packing density (D2) of the second negative electrode mixture layer to the packing density (D1) of the first negative electrode mixture layer, namely D2/D1 is from 0.9 to 1.1. With respect to this nonaqueous electrolyte secondary battery, a separator has a first surface that is in contact with a positive electrode and a second surface that is in contact with the negative electrode; and the contact angle of the first surface with ethylene carbonate is smaller than the contact angle of the second surface with ethylene carbonate.

EP 4 075 537 A1

**(Cont. next page)**

# Figure 1

**Description**

TECHNICAL FIELD

The present disclosure relates to a non-aqueous electrolyte secondary battery.

BACKGROUND

Non-aqueous electrolyte secondary batteries which use graphite particles as a negative electrode active material are widely in use as secondary batteries of high energy densities. A battery capacity can be increased by increasing a packing density per unit volume of the negative electrode active material in a negative electrode mixture layer, but when the packing density of the negative electrode active material is increased, pores between negative electrode active materials become smaller, and circulation of an electrolyte solution is degraded, which results in a problem in that the battery capacity is reduced with a charge/discharge cycle in which rapid charging is repeated (rapid charge/discharge cycle).

For example, in inventions disclosed in Patent Literatures 1 ~ 3, the packing density of the negative electrode active material in the negative electrode mixture layer is set to be lower at an outer surface side than at an electricity collector side so that pores between negative electrode active materials are enlarged at the outer surface side and the circulation of the electrolyte solution is improved. However, because the amount of negative electrode active material per unit volume in the negative electrode mixture layer is reduced, there is a problem in that the battery capacity is reduced. Further, with the improvement of the circulation in the negative electrode mixture layer, balance between electrolyte solutions at a positive electrode side and a negative electrode side may be disturbed, resulting in reduction of the battery capacity under a high-temperature environment. In these perspectives, the inventions of Patent Literatures 1 ~ 3 still have a room of improvement.

CITATION LIST

PATENT LITERATURE

PATENT LITERATURE 1: Japanese Unexamined Patent Application Publication No. 2003-77463

PATENT LITERATURE 2: Japanese Unexamined Patent Application Publication No. 2006-196457

PATENT LITERATURE 3: Japanese Unexamined Patent Application Publication No. 2015-511389

SUMMARY

PROBLEM TO BE SOLVED

An advantage of the present disclosure lies in provision of a non-aqueous electrolyte secondary battery in which a rapid charge/discharge cycle characteristic and a high-temperature storage characteristic are improved while reduction in the battery capacity is suppressed.

SOLUTION TO PROBLEM

According to one aspect of the present disclosure, there is provided a non-aqueous electrolyte secondary battery including: an electrode assembly in which a positive electrode and a negative electrode oppose each other with a separator therebetween; a non-aqueous electrolyte; and an outer housing that houses the electrode assembly and the non-aqueous electrolyte. The negative electrode includes a negative electrode current collector, a first negative electrode mixture layer provided over a surface of the negative electrode current collector, and a second negative electrode mixture layer provided over a surface of the first negative electrode mixture layer, the first negative electrode mixture layer and the second negative electrode mixture layer include graphite particles, a ratio ($S2/S1$) of a porosity ($S2$) between the graphite particles in the second negative electrode mixture layer to a porosity ($S1$) between the graphite particles in the first negative electrode mixture layer is 1.1 ~ 2.0, a ratio ($D2/D1$) of a packing density ($D2$) of the second negative electrode mixture layer to a packing density ($D1$) of the first negative electrode mixture layer is 0.9 - 1.1, the separator has a first surface which is in contact with the positive electrode and a second surface which is in contact with the negative electrode, and a contact angle of the first surface with respect to ethylene carbonate is smaller than a contact angle of the second surface with respect to ethylene carbonate.

ADVANTAGEOUS EFFECTS

According to an aspect of the present disclosure, a non-aqueous electrolyte secondary battery can be provided in which the rapid charge/discharge cycle characteristic and the high-temperature storage characteristic are improved while the reduction of the battery capacity is suppressed.

BRIEF DESCRIPTION OF DRAWINGS

FIG. 1 is a cross-sectional diagram along an axial direction of a secondary battery of a circular cylindrical type according to an embodiment of the present disclosure.
FIG. 2 is a cross-sectional diagram of a negative electrode according to an embodiment of the present disclosure.
FIG. 3 is a cross-sectional diagram of a separator according to an embodiment of the present disclosure.

DESCRIPTION OF EMBODIMENTS

A non-aqueous electrolyte secondary battery according to an embodiment of the present disclosure comprises: an electrode assembly in which a positive electrode and a negative electrode oppose each other with a separator therebetween; a non-aqueous electrolyte; and an outer housing that houses the electrode assembly and the non-aqueous electrolyte. The negative electrode comprises a negative electrode current collector, a first negative electrode mixture layer provided over a surface of the negative electrode current collector, and a second negative electrode mixture layer provided over a surface of the first negative electrode mixture layer, the first negative electrode mixture layer and the second negative electrode mixture layer include graphite particles, a ratio (S2/S1) of a porosity (S2) between the graphite particles in the second negative electrode mixture layer to a porosity (S1) between the graphite particles in the first negative electrode mixture layer is 1.1 ~ 2.0, a ratio (D2/D1) of a packing density (D2) of the second negative electrode mixture layer to a packing density (D1) of the first negative electrode mixture layer is 0.9 ~ 1.1, the separator has a first surface which is in contact with the positive electrode and a second surface which is in contact with the negative electrode, and a contact angle of the first surface with respect to ethylene carbonate is smaller than a contact angle of the second surface with respect to ethylene carbonate.

A secondary battery of a circular cylindrical type according to an embodiment of the present disclosure will now be described in detail with reference to the drawings. In the following, a specific shape, a specific material, a specific numerical value, a specific direction, and like are merely exemplary for the purpose of facilitating understanding of the present disclosure, and these parameters may be suitably changed according to the specification of the circular cylindrical secondary battery. Further, the outer housing is not limited to the circular cylindrical type, and may alternatively be, for example, of a polygonal type. In the following description, when a plurality of embodiments and alternative configurations are included, suitable combination of the characteristic portions thereof are contemplated from the start.

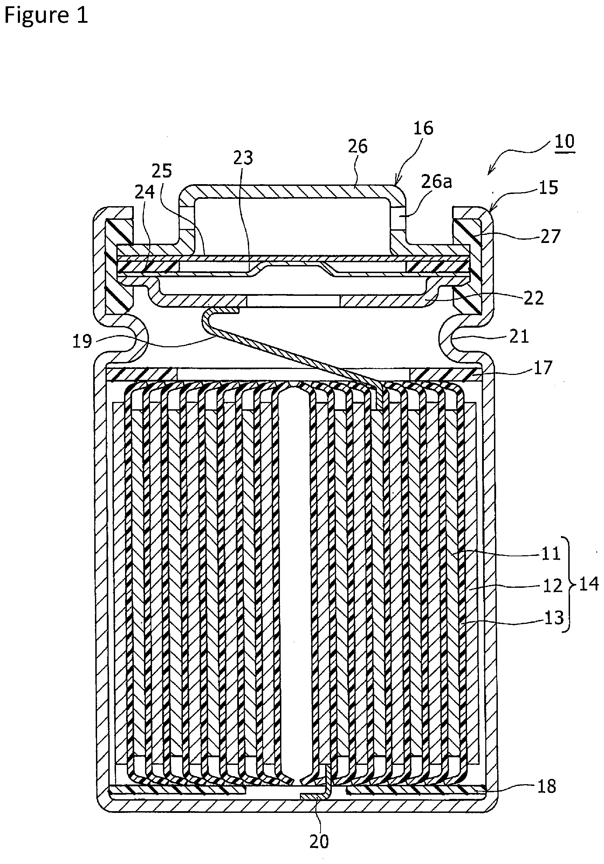

FIG. 1 is a cross-sectional diagram in an axial direction of a secondary battery 10 of a circular cylindrical type according to an embodiment of the present disclosure. In the secondary battery 10 shown in FIG. 1, an electrode assembly 14 and a non-aqueous electrolyte (not shown) are housed in an outer housing 15. The electrode assembly 14 has a wound type structure in which a positive electrode 11 and a negative electrode 12 are wound with a separator 13 therebeween. In the following, for convenience of description, a side of a sealing element 16 will be referred to as an "upper side", and a side of a bottom of the outer housing 15 will be referred to as a "lower side".

An opening end of the outer housing 15 is blocked by the sealing element 16 so that an inside of the secondary battery 10 is airtightly closed. Insulating plates 17 and 18 are provided respectively above and below the electrode assembly 14. A positive electrode lead 19 extend upward through a through hole of the insulating plate 17, and is welded to a lower surface of a filter 22 which is a bottom plate of the sealing element 16. In the secondary battery 10, a cap 26 which is a top plate of the sealing element 16 electrically connected to the filter 22 serves as a positive electrode terminal. On the other hand, a negative electrode lead 20 extends to the side of the bottom of the outer housing 15 through a through hole of the insulating plate 18, and is welded to an inner surface of the bottom of the outer housing 15. In the secondary battery 10, the outer housing 15 serves as a negative electrode terminal. When the negative electrode lead 20 is placed at a terminating end, the negative electrode lead 20 extends through an outer side of the insulating plate 18 and to the side of the bottom of the outer housing 15, and is welded to the inner surface of the bottom of the outer housing 15.

The outer housing 15 is, for example, a metal outer housing can of a circular cylindrical shape with a bottom.

A gasket 27 is provided between the outer housing 15 and the sealing element 16, so as to secure airtightness of the inside of the secondary battery 10. The outer housing 15 has a groove portion 21 which is formed, for example, by pressing a side surface portion from an outer side, and which supports the sealing element 16. The groove portion 21 is desirably formed in an annular shape along a circumferential direction of the outer housing 15, and supports the sealing element 16 with the upper surface thereof, via the gasket 27.

The sealing element 16 has the filter 22, a lower valve element 23, an insulating member 24, an upper valve element 25, and the cap 26, which are layered in this order from the side of the electrode assembly 14. The members of the sealing element 16 have, for example, a circular disk shape or a ring shape, and members other than the insulating member 24 are electrically connected to each other. The lower valve element 23 and the upper valve element 25 are connected to each other at respective center parts, and the insulating member 24 interposes between peripheral parts of the valve elements. When an inner pressure of the battery increases due to abnormal heat generation, for example, the lower valve element 23 ruptures, the upper valve element 25 expands to the side of the cap 26, and moves away from the lower valve element 23, so that the electrical connection between the valve elements is shut out. When the inner pressure further increases, the upper valve element 25 ruptures, and gas is discharged from an opening 26a of the cap 26.

The positive electrode 11, the negative electrode 12, the separator 13, and the non-aqueous electrolyte forming the electrode assembly 14 will now be described in detail. In particular, a negative electrode active material included in a negative electrode mixture layer of the negative electrode 12 and the separator 13 will be described in detail.

[Negative Electrode]

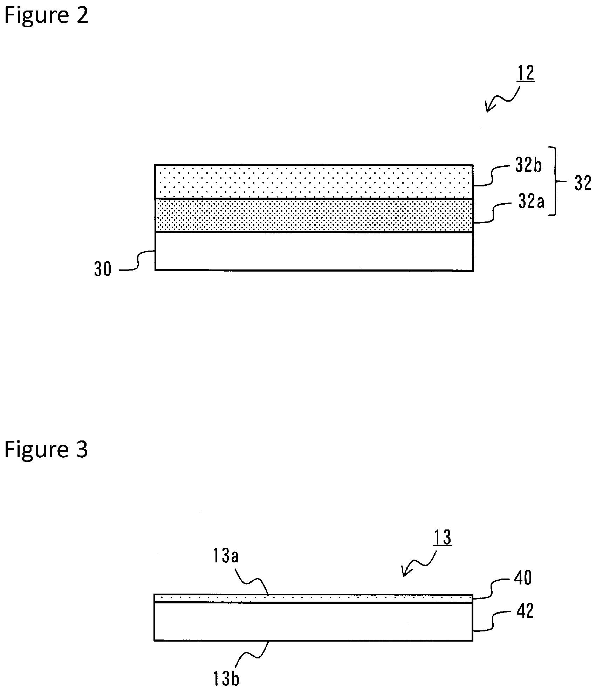

FIG. 2 is a cross-sectional diagram of the negative electrode 12 according to an embodiment of the present disclosure. The negative electrode 12 includes a negative electrode current collector 30, a first negative electrode mixture layer 32a provided over a surface of the negative electrode current collector 30, and a second negative electrode mixture layer 32b provided over a surface of the first negative electrode mixture layer 32a. The first negative electrode mixture layer 32a and the second negative electrode mixture layer 32b may have a same thickness or thicknesses different from each other. A ratio of the thicknesses between the first negative electrode mixture layer 32a and the second negative electrode mixture layer 32b is, for example, 3:7 ~ 7:3, is desirably 4:6 ~ 6:4, and is more desirably 5:5 - 6:4.

For the negative electrode current collector 30, there may be employed, for example, a foil of metal stable within a potential range of the negative electrode such as copper, a film on a surface layer of which the metal is placed, or the like. A thickness of the negative electrode current collector 30 is, for example, 5 $\mu$m ~ 30 $\mu$m.

The first negative electrode mixture layer 32a and the second negative electrode mixture layer 32b (in the following, the first negative electrode mixture layer 32a and the second negative electrode mixture layer 32b may be collectively referred to as a "negative electrode mixture layer 32") include graphite particles. In addition, the negative electrode mixture layer 32 desirably includes a binder agent or the like. As the binder agent, there may be exemplified, for example, a fluorine-based resin, polyacrylonitrile (PAN), a polyimide-based resin, an acrylic resin, a polyolefin-based resin, styrene-butadiene rubber (SBR), nitrile-butadiene rubber (NBR), carboxymethyl cellulose (CMC) or a salt thereof, polyacrylic acid (PAA) or a salt thereof (such as PAA-Na, PAA-K, or a fractional neutralization type salt), polyvinyl alcohol (PVA), or the like. These materials may be employed as a single material or a combination of two or more of these materials may be used.

As the graphite particles used in the present embodiment, there may be exemplified natural graphite, artificial graphite, or the like. A plane spacing ($d_{002}$) of a (002) plane of the graphite particles used in the present embodiment, measured by an X-ray wide-angle diffraction, is, for example, desirably 0.3354 nm or greater, and is more desirably 0.3357 nm or greater, and desirably smaller than 0.340 nm, and is more desirably 0.338 nm or smaller. Further, a crystallite size (Lc(002)) of the graphite particles used in the present embodiment, determined by X-ray diffraction, is, for example, desirably 5 nm or greater, and is more desirably 10 nm or greater, and is desirably 300 nm or smaller, and is more desirably 200 nm or smaller. When the plane spacing ($d_{002}$) and the crystallite size (Lc(002)) satisfy the above-described ranges, the battery capacity of the secondary battery 10 tends to become larger in comparison to cases in which the above-described ranges are not satisfied.

The graphite particles included in the first negative electrode mixture layer 32a can be produced, for example, through the following method. Cokes (precursor) which are the primary raw material are ground to a predetermined size, are aggregated with a binder agent, and are pressurized and shaped in a block form. Then, the block form structure is baked at a temperature of 2600°C or higher for graphitization. The graphitized block-form shaped element is ground and sieved, to obtain graphite particles of a desired size. Here, an internal porosity of the graphite particles can be adjusted by the particle size of the precursor after the grinding and the particle size of the precursor in the aggregated state. For example, an average particle size (a volume-based median size D50, the same in the following description) of the precursor after the grinding is desirably in a range of 12 $\mu$m ~ 20 $\mu$m. Further, the internal porosity of the graphite particles can be adjusted also by an amount of volatile composition added to the block-form shaped element. When a part of the binder agent added to the cokes (precursor) evaporates during the baking, the binder agent may be used as the volatile composition. As such a binder agent, pitch may be exemplified.

The graphite particles included in the second negative electrode mixture layer 32b may be produced, for example, through the following method. Cokes (precursor) which are a primary raw material are ground to a predetermined size, and are aggregated with a binder agent such as the pitch. The resulting element is baked at a temperature of 2600°C or higher, for graphitization, and is sieved, to obtain graphite particles of a desired size. Here, the internal porosity of the graphite particles can be adjusted by a particle size of the precursor after the grinding, the particle size of the precursor in the aggregated state, or the like. For example, an average particle size of the precursor after the grinding is desirably within a range of 12 μm ~ 20 μm.

A ratio (S2/S2) of the porosity (S2) between graphite particles in the second negative electrode mixture layer 32b to a porosity (S1) between graphite particles in the first negative electrode mixture layer 32a is 1.1 ~ 2.0, is desirably 1.1 ~ 1.7, and is more desirably 1.1 ~ 1.5. When S2/S1 is less than 1.1, the circulation of the electrolyte solution is inferior, and the battery capacity is reduced with the repetition of the rapid charging. On the other hand, when S2/S1 exceeds 2.0, a packing density of the second negative electrode mixture layer 32b to be described below cannot be set to approximately equal to the packing density of the first negative electrode mixture layer 32a, and, as a consequence, the battery capacity would be reduced. The porosity between graphite particles is a two-dimensional value determined from a ratio of areas of pores between the graphite particles with respect to a cross-sectional area of the negative electrode mixture layer 32. The parameter S2/S1 is determined by calculating the porosity (S1) between graphite particles in the first negative electrode mixture layer 32a and the porosity (S2) between graphite particles in the second negative electrode mixture layer 32b with the following procedure.

<Measurement Method of Porosity between Graphite Particles>

(1) A cross section of the negative electrode mixture layer is exposed. As a method of exposing the cross section, for example, there may be exemplified a method in which a portion of the negative electrode is cut out, and machined with an ion milling device (for example, IM4000PLUS manufactured by Hitachi High-Tech Corporation), to expose the cross section of the negative electrode mixture layer.

(2) Using a scanning electron microscope, a backscattered electron image of the exposed cross section of the negative electrode mixture layer is captured for each of the first negative electrode mixture layer 32a and the second negative electrode mixture layer 32b. A magnification when the backscattered electron image is captured is, for example, 800 times.

(3) The cross-sectional image obtained by the process described above is captured into a computer, and, using an image analyzing software (for example, ImageJ manufactured by National Institute of Health) a binarization process is applied, to obtain a binarization-processed image in which a cross section of the particles in the cross sectional image is converted to black color, and the pores existing in the cross section of the particles are converted to white color.

(4) In each of the binarization-processed images of the first negative electrode mixture layer 32a and the second negative electrode mixture layer 32b, areas of the pores between graphite particles are calculated assuming, as the pores between the graphite particles, the pores inside the graphite particles (small pores not connected to the surface of the particles), among the pores converted to the white color, and portions other than the small pores connected to the surface of the graphite particles and having a width of 3 μm or smaller. The porosity between the graphite particles can be calculated based on the following formula.

$$\text{(Porosity between graphite particles)} = \text{(areas of pores between graphite particles)}/\text{(area of cross section of negative electrode mixture layer)} * 100$$

The parameters S1 and S2 are determined as average values of the above-described measurements for three times, and S1/S2 can be calculated based on S1 and S2.

A ratio (D2/D1) of the packing density (D2) of the second negative electrode mixture layer 32b to the packing density (D1) of the first negative electrode mixture layer 32a is 0.9 ~ 1.1. When S2/S1 is 1.1 ~ 2.0 and D2/D1 is within this range, the reduction of the battery capacity can be suppressed. For example, by setting the internal porosity of the graphite particles included in the first negative electrode mixture layer 32a to be higher than the internal porosity of the graphite particles included in the second negative electrode mixture layer 32b, the above-described ranges may be satisfied for S2/S1 and D2/D1.

Each of the packing density (D1) of the first negative electrode mixture layer 32a and the packing density (D2) of the second negative electrode mixture layer 32b is, for example, 1.3 g/m$^3$ ~ 2.0 g/m$^3$.

The packing density of the negative electrode mixture layer 32 is a mass per unit volume of the negative electrode mixture layer 32. First, using the negative electrode 12, the mass of the mixture per unit area is measured for each of the first negative electrode mixture layer 32a and the second negative electrode mixture layer 32b. In addition, a thickness of the mixture layer for each of the first negative electrode mixture layer 32a and the second negative electrode mixture layer 32b is measured from the cross sectional image obtained when the inter-particle porosity is calculated. When the thickness of the mixture layer is not stable, 10 points are measured in the image, and an average value may be set as the thickness of the mixture layer. The mass of the mixture per unit area may be divided by the thickness of the mixture layer, to calculate the packing density (D1) of the first negative electrode mixture layer 32a and the packing density (D2) of the second negative electrode mixture layer 32b. Based on these values, the ratio (D2/D1) of the packing density (D2) of the second negative electrode mixture layer 32b to the packing density (D1) of the first negative electrode mixture layer 32a can be obtained.

Next, a specific method for forming the first negative electrode mixture layer 32a and the second negative electrode mixture layer 32b will be described. For example, first, a negative electrode active material including the graphite particles (hereinafter, may also be referred to as "first graphite particles"), a binder agent, and a solvent such as water are mixed, to prepare a first negative electrode mixture slurry. Separately, a negative electrode active material including graphite particles different from the first graphite particles (hereinafter, may also be referred to as "second graphite particles"), a binder agent, and a solvent such as water are mixed, to prepare a second negative electrode mixture slurry. After the first negative electrode mixture slurry is applied and dried over both surfaces of the negative electrode current collector, the second negative electrode mixture slurry is applied and dried over both surfaces of the applied film of the first negative electrode mixture slurry. Then, with a rolling roller, the first negative electrode mixture layer 32a and the second negative electrode mixture layer 32b are rolled, to form the negative electrode mixture layer 32.

Even when the first negative electrode mixture layer 32a and the second negative electrode mixture layer 32b are simultaneously rolled as described above, the packing characteristics during the rolling for the first graphite particles and the second graphite particles are not necessarily the same. For example, the packing densities of the first negative electrode mixture layer 32a and the second negative electrode mixture layer 32b can be adjusted by varying granularity distributions of the first graphite particles and the second graphite particles. Further, by setting the internal porosity of the second graphite particles to be lower than the internal porosity of the first graphite particles, the inter-particle porosity can be increased while not excessively reducing the packing density of the second negative electrode mixture layer 32b. In the above-described method, the second negative electrode mixture slurry is applied after the first negative electrode mixture slurry is applied and dried, but alternatively, the second negative electrode mixture slurry may be applied after the application of the first negative electrode mixture slurry and before the drying. Further alternatively, the second negative electrode mixture slurry may be applied over the first negative electrode mixture layer 32a after the first negative electrode mixture slurry is applied, dried, and rolled. The degree of freedom of adjustment of the packing densities can be increased by varying the conditions of rolling of the first negative electrode mixture layer 32a and the second negative electrode mixture layer 32b.

At least one of the first negative electrode mixture layer 32a or the second negative electrode mixture layer 32b may include a Si-based material. The Si-based material is a material which can reversibly occlude and release lithium ions, and functions as a negative electrode active material. As the Si-based material, for example, there may be exemplified Si, an alloy including Si, silicon oxides represented by SiO$_x$ (wherein x is 0.8 ~ 1.6), or the like. The Si-based material is a negative electrode material which can improve the battery capacity more than the graphite particles. A content of the Si-based material is, for example, desirably 1 mass% ~ 10 mass% with respect to the mass of the negative electrode active material, and is more desirably 3 mass% ~ 7 mass%, from the viewpoints of improvement of the battery capacity and suppression of reduction of the rapid charge/discharge cycle characteristic.

Examples of other materials which can reversibly occlude and release the lithium ions include metals which form an alloy with lithium such as tin (Sn), or an alloy or an oxide including the metal element such as Sn. The negative electrode active material may include these other materials, and a content of these other materials is, for example, desirably 10 mass% or less with respect to the mass of the negative electrode active material.

[Positive Electrode]

The positive electrode 11 comprises a positive electrode current collector such as, for example, a metal foil, and a positive electrode mixture layer formed over the positive electrode current collector. For the positive electrode current collector, there may be employed a foil of a metal which is stable within a potential range of the positive electrode such as aluminum, a film on a surface layer of which the metal is placed, or the like. The positive electrode mixture layer includes, for example, a positive electrode active material, a binder agent, an electrically conductive material, or the like.

The positive electrode 11 can be produced by applying a positive electrode mixture slurry including the positive electrode active material, the binder agent, the electrically conductive material, or the like over the positive electrode current collector, drying the applied film to form the positive electrode mixture layer, and rolling the positive electrode mixture layer.

As the positive electrode active material, a lithium-transition metal oxide containing transition metal elements such as Co, Mn, and Ni may be exemplified. As the lithium-transition metal oxide, there may be exemplified $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (wherein M is at least one of Na, Mg, Sc, Y, Mn, Fe, Co, Ni, Cu, Zn, Al, Cr, Pb, Sb, and B, $0<x\leq1.2$, $0<y\leq0.9$, and $2.0\leq z\leq2.3$). These materials may be employed as a single material or a mixture of two or more of these materials may be employed. From the viewpoint of increasing the capacity of the non-aqueous electrolyte secondary battery, the positive electrode active material desirably includes lithium-nickel composite oxide such as $Li_xNiO_2$, $Li_xCo_yNi_{1-y}O_2$, and $Li_xNi_{1-y}M_yO_z$ (wherein M is at least one of Na, Mg, Sc, Y, Mn, Fe, Co, Ni, Cu, Zn, Al, Cr, Pb, Sb, and B, $0<x\leq1.2$, $0<y\leq0.9$, and $2.0\leq z\leq2.3$)

As the electrically conductive material, there may be exemplified, for example, carbon black (CB), acetylene black (AB), Ketjen black, and carbon-based particles such as graphite, or the like. These materials may be used as a single material or a combination of two or more of these materials may be used.

As the binder agent, there may be exemplified, for example, a fluororesin such as polytetrafluoroethylene (PTFE), polyvinylidene fluoride (PVdF), polyacrylonitrile (PAN), a polyimide-based resin, an acrylic resin, a polyolefin-based resin, or the like. These materials may be used as a single material or a combination of two or more of these materials may be used.

[Separator]

FIG. 3 is a cross-sectional diagram of the separator 13 according to an embodiment of the present disclosure. The separator 13 has a first surface 13a which is in contact with the positive electrode 11, and a second surface 13b which is in contact with the negative electrode 12. A contact angle of the first surface 13a with respect to ethylene carbonate is smaller than a contact angle of the second surface 13b with respect to ethylene carbonate. With such a configuration, a wetting property of the first surface 13a with respect to the non-aqueous electrolyte is improved in comparison to the second surface 13b, so that balance of the non-aqueous electrolyte is maintained between the side of the positive electrode 11 and the side of the negative electrode 12. In the present embodiment, a coating layer 40 is placed over the first surface 13a, and a base material layer 42 is placed over the second surface 13b. When a coating layer having a larger contact angle with respect to ethylene carbonate than the base material layer 42 is used, the coating layer may be placed over the second surface 13b. The contact angle is an angle measured by a static drop method, and can be measured, for example, using a fully-automated contact angle meter (such as DM-901 Type manufactured by Kyowa Interface Science Co., Ltd.).

For the base material layer 42, for example, a porous sheet having an ion permeability and an insulating property is employed. Specific examples of the porous sheet include a microporous film, a woven fabric, a non-woven fabric, or the like. As a material forming the separator 13, there may be exemplified an olefin-based resin such as polyethylene and polypropylene, cellulose, or the like. Desirably, a polyolefin-based resin is used. Alternatively, the separator 13 may be a multilayer separator having a plurality of base material layers. When the contact angle of the first surface 13a with respect to ethylene carbonate is set to be smaller than the contact angle of the second surface 13b with respect to ethylene carbonate using the multilayer separator, the coating layer 40 is not necessarily provided. A thickness of the base material layer 42 is, for example, 5 μm ~ 30 μm, and is desirably 8 μm ~ 20 μm.

The coating layer 40 may include, for example, a polymer. No particular limitation is imposed on the polymer included in the coating layer 40, and there may be exemplified, for example, polyamide, polyamideimide, polyimide, or the like. Desirably, the coating layer 40 includes at least one of polyamide and polyamideimide.

The coating layer 40 may include inorganic particles. With this configuration, the contact angle of the surface of the coating layer 40 may be reduced. A content of the inorganic particles in the coating layer 40 is, for example, 30 mass% ~ 70 mass%. No particular limitation is imposed on the inorganic particles included in the coating layer 40, and, for example, inorganic oxides may be employed. As the inorganic oxide, for example, there may be exemplified alumina, titania, zirconia, or the like. Desirably, the coating layer 40 includes at least one of alumina and titania. A thickness of the coating layer 40 is, for example, 1 μm ~ 5 μm.

The coating layer 40 may be produced over one surface of the base material layer 42 through a doctor blade method, a gravure coating method, a transfer method, or a die-coating method.

[Non-aqueous Electrolyte]

The non-aqueous electrolyte includes a non-aqueous solvent and an electrolyte salt dissolved in the non-aqueous solvent. The non-aqueous electrolyte is not limited to a liquid electrolyte (electrolyte solution), and may alternatively be a solid electrolyte using a gel-form polymer or the like. For the non-aqueous solvent, for example, esters, ethers, nitriles such as acetonitrile, amides such as dimethylformamide, or a mixture solvent of two or more of these solvents may be employed. The non-aqueous solvent may include a halogen-substituted product in which at least a part of hydrogens of the solvent described above is substituted with a halogen atom such as fluorine.

Examples of the esters include cyclic carbonates such as ethylene carbonate (EC), propylene carbonate (PC), and butylene carbonate, chain carbonates such as dimethyl carbonate (DMC), ethylmethyl carbonate (EMC), diethyl carbonate (DEC), methylpropyl carbonate, ethylpropyl carbonate, and methylisopropyl carbonate, cyclic carboxylate esters such as $\gamma$-butyrolactone and $\gamma$-valerolactone, and chain carboxylate esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl furan, 1,8-cineol, and crown ether, and chain ethers such as 1,2-dimethoxy ethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxy ethane, 1,2-dibutoxy ethane, diethylene glycol dimethyl ether, diethylene glycol diethyl ether, diethylene glycol dibutyl ether, 1,1-dimethoxy methane, 1,1-diethoxy ethane, triethylene glycol dimethyl ether, and tetraethylene glycol dimethyl ether.

As the halogen-substituted product, desirably, a fluorinated cyclic carbonate such as fluoroethylene carbonate (FEC), a fluorinated chain carbonate, or a fluorinated chain carboxylate ester such as fluoromethyl propionate (FMP) is employed.

The electrolyte salt is desirably a lithium salt. Examples of the lithium salt include $LiBF_4$, $LiClO_4$, $LiPF_6$, $LiAsF_6$, $LiSbF_6$, $LiAlCl_4$, $LiSCN$, $LiCF_3SO_3$, $LiCF_3CO_2$, $Li(P(C_2O_4)F_4)$, $LiPF_{6-x}(C_nF_{2n+1})_x$ (wherein $1<x<6$, n is 1 or 2), $LiB_{10}Cl_{10}$, $LiCl$, $LiBr$, $LiI$, lithium chloroborane, lithium lower aliphatic carboxylate, borate salts such as $Li_2B_4O_7$ and $Li(B(C_2O_4)F_2)$, and imide salts such as $LiN(SO_2CF_3)_2$, and $LiN(CiF_{2l+1}SO_2)(C_mF_{2m+1}SO_2)$ (wherein each of l and m is an integer greater than or equal to 1). As the lithium salt, these materials may be used as a single material or a mixture of a plurality of these materials may be used. Of these, $LiPF_6$ is desirably used, from the viewpoints of ion conductivity, electrochemical stability, or the like. A concentration of the lithium salt is desirably set to 0.8 ~ 1.8 mol per 1 L of the solvent.

EXAMPLES

The present disclosure will now be described in further detail with reference to an Example. The present disclosure, however, is not limited to the Example.

<Example>

[Production of Positive Electrode]

As the positive electrode active material, aluminum-containing lithium nickel-cobaltate ($LiNi_{0.88}Co_{0.09}Al_{0.03}O_2$) was employed. 100 parts by mass of the positive electrode active material, 1 part by mass of graphite serving as the electrically conductive material, and 0.9 parts by mass of polyvinylidene fluoride powder serving as the binder agent were mixed, and a suitable amount of N-methyl-2-pyrrolidone (NMP) was added, to prepare a positive electrode mixture slurry. The slurry was applied over both surfaces of a positive electrode current collector formed from an aluminum foil (having a thickness of 15 $\mu$m) by a doctor blade method, the applied film was dried, and rolled with a rolling roller, to produce a positive electrode in which a positive electrode mixture layer was formed over both surfaces of the positive electrode current collector.

[Production of Graphite Particles A]

Pitch serving as the binder agent was added to cokes having an average particle size of 17 $\mu$m, and the resulting material was aggregated. An isotropic pressure was applied to the aggregate, to produce a block-form shaped element having a density of 1.6 $g/cm^3$ ~ 1.9 $g/cm^3$. The block-form shaped element was baked at a temperature of 2800°C for graphitization, and the resulting material was ground and sieved, to produce graphite particles A having an average particle size of 23 $\mu$m.

[Production of Graphite Particles B]

Pitch serving as the binder agent was added to cokes having an average particle size of 13 $\mu$m, and the resulting material was aggregated until the average particle size is 18 $\mu$m. The aggregate was baked at a temperature of 2800°C for graphitization, and sieved, to produce graphite particles B having an average particle size of 23 $\mu$m. When the graphite

particles B were produced, an amount of pitch added to the cokes was set smaller than the amount of pitch used for production of the graphite particles A, and the average particle size of the aggregate was adjusted as described above, so that the graphite particles B were produced having a smaller internal porosity in comparison to the graphite particles A.

[Production of Negative Electrode]

95 parts by mass of the graphite particles A, and 5 parts by mass of SiO were mixed, and the mixture was set as a negative electrode active material A. The negative electrode active material A, carboxymethyl cellulose (CMC), and styrene-butadiene copolymer rubber (SBR) were mixed with a mass ratio of (negative electrode active material A):(CMC):(SBR) of 100:1:1, and the mixture was kneaded in water, to prepare a first negative electrode mixture slurry. 95 parts by mass of the graphite particles B, and 5 parts by mass of SiO were mixed, and the mixture was set as a negative electrode active material B. The negative electrode active material B, carboxymethyl cellulose (CMC), and styrene-butadiene copolymer rubber (SBR) were mixed with a mass ratio of (negative electrode active material B):(CMC):(SBR) of 100:1:1, and the mixture was kneaded in water, to prepare a second negative electrode mixture slurry.

The first negative electrode mixture slurry was applied over both surfaces of a negative electrode current collector formed from a copper foil by the doctor blade method, and was dried to form a first negative electrode mixture layer. Further, the second negative electrode mixture slurry described above was applied over the first negative electrode mixture layer, and was dried, to form a second negative electrode mixture layer. In this process, an application mass ratio per unit area between the first negative electrode mixture slurry and the second negative electrode mixture slurry was set to 5:5. The first negative electrode mixture layer and the second negative electrode mixture layer were rolled by a rolling roller, to produce a negative electrode.

[Production of Non-aqueous Electrolyte]

To 100 parts by mass of a non-aqueous solvent in which ethylene carbonate (EC) and dimethyl carbonate were mixed in a volume ratio of 1:3, 5 parts by mass of vinylene carbonate (VC) was added, $LiPF_6$ was dissolved with a concentration of 1.5 mol/L, and the resulting material was set as a non-aqueous electrolyte.

[Production of Separator]

An aramid resin including alumina was applied by the doctor blade method over one surface of a polypropylene microporous film serving as a base material layer, was dried, and was compressed, to produce a separator having a coating layer.

[Production of Non-aqueous Electrolyte Secondary Battery]

(1) After a positive electrode lead was attached to the positive electrode current collector and a negative electrode lead was attached to the negative electrode current collector, the positive electrode and the negative electrode were wound with the separator therebetween in such an orientation that the coating layer is in contact with the positive electrode, to produce a wound-type electrode assembly.
(2) Insulating plates were placed respectively above and below the electrode assembly, the negative electrode lead was welded to an outer housing, the positive electrode lead was welded to a sealing element, and the electrode assembly was housed in the outer housing.
(3) After the non-aqueous electrolyte was injected through a reduced pressure method into the outer housing, an opening of the outer housing was sealed with the sealing element via a gasket, to form a non-aqueous electrolyte secondary battery.

[Calculation of Porosity between Graphite Particles]

Under an environmental temperature of 25°C, the non-aqueous electrolyte secondary battery was charged with a constant current of 0.2 C (920 mA) to 4.2 V, and was then charged with a constant voltage of 4.2V until C/50. Then, the non-aqueous electrolyte secondary battery was discharged with a constant current of 0.2 C until 2.5 V. With these charging and discharging as one cycle, 5 cycles of charging and discharging were performed. The negative electrode was taken out from the non-aqueous electrolyte secondary battery after the 5 cycles, and porosity between graphite particles was calculated.

[Evaluation of Rapid Charge/Discharge Cycle Characteristic]

Under an environmental temperature of 25°C, the non-aqueous electrolyte secondary battery was charged with a constant current of 1 C (4600 mA) until 4.2 V, and was then charged with a constant voltage of 4.2 V until 1/50 C. Then, the non-aqueous electrolyte secondary battery was discharged with a constant current of 0.5 C until 2.5 V. With these charging and discharging as one cycle, 100 cycles of charging and discharging were performed. A capacity maintenance percentage at the rapid charge/discharge cycle of the non-aqueous electrolyte secondary battery was determined by the following formula. In addition, a discharge capacity at the first cycle was set as the battery capacity.

$$\text{(Capacity maintenance percentage)} = ((\text{discharge capacity at 100th cycle})/(\text{discharge capacity at 1st cycle})) \times 100$$

[Evaluation of High-temperature Storage Characteristic]

Under an environmental temperature of 25°C, the non-aqueous electrolyte secondary battery was charged with a constant current of 1 C (4600 mA) until 4.2 V, and was then charged with a constant voltage of 4.2 V until 1/50 C. Then, the non-aqueous electrolyte secondary battery was discharged with a constant current of 0.5 C until 2.5 V, and a discharge capacity at this point was measured and was set as an initial capacity. Then, under an environmental temperature of 25°C, the non-aqueous electrolyte secondary battery was charged with a constant current of 1 C until 4.2 V, and was then charged with a constant voltage of 4.2 V until 1/50 C. This state was set as a fully charged state. The non-aqueous electrolyte secondary battery in the fully charged state was stored in a constant-temperature tank maintained at a temperature of 60°C for 20 days. Under an environmental temperature of 25°C, the battery after the storage of 20 days was discharged at a constant current of 0.5 C until 2.5 V, and the discharge capacity measured under the same conditions as the initial capacity measurement was set as a capacity after the storage. A capacity recovery percentage was determined by the following formula.

$$\text{(Capacity recovery percentage)} = ((\text{capacity after storage})/(\text{initial capacity})) \times 100$$

<Comparative Example 1>

A non-aqueous electrolyte secondary battery was produced in a manner similar to Example except that the coating layer of the separator was set to be in contact with the negative electrode. The produced non-aqueous electrolyte secondary battery was assessed.

<Comparative Example 2>

A non-aqueous electrolyte secondary battery was produced in a manner similar to Example except that the coating layer was not formed in the separator. The produced non-aqueous electrolyte secondary battery was assessed.

<Comparative Example 3>

A non-aqueous electrolyte secondary battery was produced in a manner similar to Example except that the negative electrode active material A included in the first negative electrode mixture slurry and the negative electrode active material B included in the second negative electrode mixture slurry were respectively a mixture in which 47.5 parts by mass of the graphite particles A and 5 parts by mass of SiO were mixed and a mixture in which 47.5 parts by mass of the graphite particles B and 5 parts by mass of SiO were mixed. The produced non-aqueous electrolyte secondary battery was assessed.

<Comparative Example 4>

A non-aqueous electrolyte secondary battery was produced in a manner similar to Comparative Example 1 except that the negative electrode active material A included in the first negative electrode mixture slurry and the negative electrode active material B included in the second negative electrode mixture slurry were respectively a mixture in which 47.5 parts by mass of the graphite particles A and 5 parts by mass of SiO were mixed and a mixture in which 47.5 parts by mass of the graphite particles B and 5 parts by mass of SiO were mixed. The produced non-aqueous electrolyte secondary battery was assessed.

<Comparative Example 5>

A non-aqueous electrolyte secondary battery was produced in a manner similar to Comparative Example 2 except that the negative electrode active material A included in the first negative electrode mixture slurry and the negative electrode active material B included in the second negative electrode mixture slurry were respectively a mixture in which 47.5 parts by mass of the graphite particles A and 5 parts by mass of SiO were mixed and a mixture in which 47.5 parts by mass of the graphite particles B and 5 parts by mass of SiO were mixed. The produced non-aqueous electrolyte secondary battery was assessed.

TABLE 1 summarizes results of the capacity maintenance percentage at the rapid charge/discharge cycle, and the capacity recovery percentage after high-temperature storage, for the non-aqueous electrolyte secondary batteries of Example and Comparative Examples. TABLE 1 also shows values for D1, D2, D2/D1, and S2/S1. A higher value for the capacity maintenance percentage at the rapid charge/discharge cycle shows a higher degree of suppression of the reduction of the rapid charge/discharge cycle characteristic.

[TABLE 1]

| | SEPARATOR | NEGATIVE ELECTRODE | | | | | | EVALUATION RESULT | |
|---|---|---|---|---|---|---|---|---|---|
| | COATING LAYER | GRAPHITE PARTICLES | | PACKING DENSITY (g/m3) | | RATIO OF PACKING DENSITY (D2/D1) | RATIO OF INTER - PARTICLE POROSITY (S2/S1) | CAPACITY MAINTENANCE PERCENT AGE (%) | CAPACITY RECOVERY PERCENTAGE (%) |
| | | FIRST LAYER | SECOND LAYER | FIRST LAYER (D1) | SECOND LAYER (D2) | | | | |
| EXAMPLE | POSITIVE ELECTRODE SIDE | A | B | 1.59 | 1.49 | 0.94 | 1.39 | 81.7 | 94 |
| COMP ARATIVE EXAMPLE 1 | NEGATIVE ELECTRODE SIDE | A | B | 1.59 | 1.49 | 0.94 | 1.39 | 80.7 | 78 |
| COMP ARATIVE EXAMPLE 2 | NON-EXISTENT | A | B | 1.59 | 1.49 | 0.94 | 1.39 | 81.3 | 86 |
| COMP ARATIVE EXAMPLE 3 | POSITIVE ELECTRODE SIDE | A+B | A+B | 1.51 | 1.51 | 1.00 | 0.94 | 61.8 | 89 |
| COMP ARATIVE EXAMPLE 4 | NEGATIVE ELECTRODE SIDE | A+B | A+B | 1.51 | 1.51 | 1.00 | 0.94 | 61.5 | 79 |
| COMP ARATIVE EXAMPLE 5 | NON-EXISTENT | A+B | A+B | 1.51 | 1.51 | 1.00 | 0.94 | 62.2 | 87 |
| FIRST LAYER: FIRST NEGATIVE ELECTRODE MIXTURE LAYER, SECOND LAYER; SECOND NEGATIVE ELECTRODE MIXTURE LAYER | | | | | | | | | |

It was confirmed that, in Example, the capacity maintenance percentage and the capacity recovery percentage were higher than those of Comparative Examples 1 ~ 5, indicating improvements in the rapid charge/discharge cycle characteristic and the high-temperature storage capacity. With regard to the rapid charge/discharge cycle characteristic, it can be considered that the circulation of the electrolyte at the negative electrode was improved by setting the inter-particle pores of the second negative electrode mixture layer high. With regard to the high-temperature storage characteristic, it can be considered that the non-aqueous electrolyte was balanced between the positive electrode side and the negative electrode side with the placement of the coating layer over the surface of the separator in contact with the positive electrode. Such a balance of the non-aqueous electrolyte is due to a difference in wetting characteristics, with respect to the non-aqueous electrolyte, of the surface of the separator in contact with the positive electrode and the surface of the separator in contact with the negative electrode. Therefore, the above-described advantage can be achieved by setting the contact angle of the first surface with respect to ethylene carbonate to be smaller than the contact angle of the second surface with respect to ethylene carbonate.

REFERENCE SIGNS LIST

10 secondary battery, 11 positive electrode, 12 negative electrode, 13 separator, 13a first surface, 13b second surface, 14 electrode assembly, 15 outer housing, 16 sealing element, 17, 18 insulating plate, 19 positive electrode lead, 20 negative electrode lead, 21 groove portion, 22 filter, 23 lower valve element, 24 insulating member, 25 upper valve element, 26 cap, 26a opening, 27 gasket, 30 negative electrode current collector, 32 negative electrode mixture layer, 32a first negative electrode mixture layer, 32b second negative electrode mixture layer, 40 coating layer, 42 base material layer.

**Claims**

1.  A non-aqueous electrolyte secondary battery comprising:

    an electrode assembly in which a positive electrode and a negative electrode oppose each other with a separator therebetween;
    a non-aqueous electrolyte; and
    an outer housing that houses the electrode assembly and the non-aqueous electrolyte, wherein
    the negative electrode comprises a negative electrode current collector, a first negative electrode mixture layer provided over a surface of the negative electrode current collector, and a second negative electrode mixture layer provided over a surface of the first negative electrode mixture layer,
    the first negative electrode mixture layer and the second negative electrode mixture layer include graphite particles,
    a ratio (S2/S1) of a porosity (S2) between the graphite particles in the second negative electrode mixture layer to a porosity (S1) between the graphite particles in the first negative electrode mixture layer is 1.1 ~ 2.0,
    a ratio (D2/D1) of a packing density (D2) of the second negative electrode mixture layer to a packing density (D1) of the first negative electrode mixture layer is 0.9 ~ 1.1,
    the separator has a first surface which is in contact with the positive electrode and a second surface which is in contact with the negative electrode, and
    a contact angle of the first surface with respect to ethylene carbonate is smaller than a contact angle of the second surface with respect to ethylene carbonate.

2.  The non-aqueous electrolyte secondary battery according to claim 2, wherein

    the separator includes a base material layer and a coating layer, and
    the coating layer is placed over the first surface.

3.  The non-aqueous electrolyte secondary battery according to claim 2, wherein
    the base material layer includes a polyolefin-based resin.

4.  The non-aqueous electrolyte secondary battery according to claim 2 or 3, wherein
    the coating layer includes an aramid resin and inorganic particles.

5.  The non-aqueous electrolyte secondary battery according to any one of claims 1 to 4, wherein
    each of the packing density (D1) of the first negative electrode mixture layer and the packing density (D2) of the second negative electrode mixture layer is 1.3 g/m$^3$ ~ 2.0 g/m$^3$.

6. The non-aqueous electrolyte secondary battery according to any one of claims 1 to 5, wherein at least one of the first negative electrode mixture layer or the second negative electrode mixture layer includes a Si-based material.

## Figure 1

Figure 2

Figure 3

## INTERNATIONAL SEARCH REPORT

| International application No. |
| --- |
| PCT/JP2020/045747 |

### A. CLASSIFICATION OF SUBJECT MATTER

H01M 4/13(2010.01)i; H01M 4/133(2010.01)i; H01M 4/134(2010.01)i; H01M 4/36(2006.01)i; H01M 10/05(2010.01)i; H01M 50/409(2021.01)i
FI: H01M10/05; H01M4/133; H01M4/36 E; H01M4/134; H01M4/13; H01M2/16 L

According to International Patent Classification (IPC) or to both national classification and IPC

### B. FIELDS SEARCHED

Minimum documentation searched (classification system followed by classification symbols)
H01M4/13; H01M4/133; H01M4/134; H01M4/36; H01M10/05; H01M50/409

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2011-009203 A (NISSAN MOTOR CO., LTD.) 13 January 2011 (2011-01-13) claims | 1-6 |
| A | WO 2013/031226 A1 (PANASONIC CORP.) 07 March 2013 (2013-03-07) claims | 1-6 |
| A | JP 2000-138061 A (NEC CORP.) 16 May 2000 (2000-05-16) entire text, all drawings | 1-6 |

☐ Further documents are listed in the continuation of Box C.  ☒ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 08 February 2021 (08.02.2021) | 22 February 2021 (22.02.2021) |

| Name and mailing address of the ISA/ | Authorized officer |
| --- | --- |
| Japan Patent Office
3-4-3, Kasumigaseki, Chiyoda-ku,
Tokyo 100-8915, Japan | Telephone No. |

Form PCT/ISA/210 (second sheet) (January 2015)

INTERNATIONAL SEARCH REPORT

Information on patent family members

International application No.

PCT/JP2020/045747

| Patent Documents referred in the Report | Publication Date | Patent Family | Publication Date |
|---|---|---|---|
| JP 2011-009203 A | 13 Jan. 2011 | (Family: none) | |
| WO 2013/031226 A1 | 07 Mar. 2013 | US 2014/0178732 A1<br>claims<br>CN 103582973 A | |
| JP 2000-138061 A | 16 May 2000 | US 6803150 B1<br>entire text, all<br>drawings<br>TW 442994 B<br>CA 2341693 A1<br>KR 10-2001-0072967 A | |

Form PCT/ISA/210 (patent family annex) (January 2015)

**EP 4 075 537 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003077463 A
- JP 2006196457 A
- JP 2015511389 A